# EUROPEAN PATENT SPECIFICATION

(11) **EP 0 934 129 B1**
(45) Date of publication and mention of the grant of the patent: **21.02.2001**
(21) Application number: 97944212.6
(22) Date of filing: 10.10.1997
(51) Int. Cl.: B08B 3/02, B01F 3/04

(54) **METHOD AND DEVICE FOR CLEANING A DIRTY SURFACE**
VERFAHREN UND VORRICHTUNG ZUM REINIGEN EINER SCHMUTZIGEN OBERFLÄCHE
PROCEDE ET DISPOSITIF POUR NETTOYER UNE SURFACE SALE

(30) Priority: 24.10.1996 NL 1004462; 17.07.1997 NL 1006604
(43) Date of publication of application: 11.08.1999
(73) Proprietor: Ht Idee B.V., 1303 AB Almere (NL)
(72) Inventor: WINTERS, Antonius, Paul, Leo, Maria, NL-8307 PC Ens (NL)
(74) Representative: Hooiveld, Arjen Jan Winfried
(86) International application number: NL9700566
(87) International publication number: WO9817408

(56) References cited:
- EP-A- 0 294 690
- EP-A- 0 548 408
- DE-A- 3 318 140
- DE-U- 9 404 305
- FR-A- 2 530 967

## Description

The invention relates to a method for cleaning a dirty surface, wherein water is squirted from a nozzle against the dirty surface in order to wash away the dirt with the water.

Such a method is generally known. With the known method water is forcefully squirted from the nozzle onto the dirty surface, whereby the dirt is washed away from the surface with the water and a cleaned surface is obtained.

One drawback of the known method is that apart from the fact that a relatively large amount of water is needed to achieve an adequate cleaning effect, that statutory regulations in a growing number of countries furthermore forbid the discharge of the washed-away water, which is contaminated with dirt, into the surface water. This drawback will be explained in more detail by means of the example below. Consumer demands force growers to present their crops to the retail trade in clean condition, that is, looking attractive. For the average Dutch leek grower this meant in 1996 that as many as 30,000 litres of pure water had to be used per hour to wash leek adequately. Now that pure water is becoming increasingly rare and consequently more expensive these days, such quantities of used-up water are unacceptable, also from a social point of view. Leek growers are legally prohibited from discharging the water contaminated with dirt from the leek into the surface water just like that, however, so that the grower is obliged to take additional measures for purifying the washing water. Usually the so-called "basin method" is used thereby, the washing water contaminated with earth is allowed to settle in a basin, as a result of which the earth can deposit on the bottom of the basin and the water in the upper portions of the basin will become relatively pure. Taking into account the above-mentioned amounts of water required for cleaning leek, huge basins are needed in practice, also because the sedimentation process typical of the "basin method" proceeds very slowly. It will be apparent that the industry in general is faced on the one hand with the need to supply clean products in order to meet consumer requirements, and on the other hand with the need to use less and less (tap) water, whereby washing water is only discharged into the surface water after being purified. In spite of the industry's long-felt need to find an adequate solution for this dilemma, nobody has succeeded in doing so up to now.

The object of the invention is to provide a method for cleaning a dirty surface, wherein the drawbacks of the prior art are overcome in a simple yet efficient manner, that is, that considerably less water is required for cleaning a dirty surface, without this having an adverse effect on the cleaning result.

In order to accomplish that objective a method of the kind referred to in the introduction is according to the invention as specified in Claims 1 and 22. Compressed air is supplied to the water in a mixing chamber, which is upstream of the nozzle, at a predetermined pressure, after which the water is squirted against the dirty surface in a spray of droplets, downstream of the nozzle. Extensive research has surprisingly shown that when the water is mixed with the pressurized air in the mixing chamber, it becomes possible to squirt the water in a spray of droplets against the dirty surface downstream of the nozzle. A very great cleaning effect is achieved with the mixture of water and compressed air exiting the nozzle and the fine water droplets thus produced. Furthermore the water droplets hitting the dirty surface appear to wash away the dirt and thus produce a cleaning effect, whilst the force at which the spray of water droplets is squirted onto the dirty surface appears to be so small in practice, that the surface is not damaged. The velocity at which the water droplets, which have a particular mass, are being moved is effected by the compressed air, as it were, which results in an optimum impetus of the water droplets. Compared with the known method the method according to the invention appears to provide a water saving of more than 95%, which in the above-discussed example of the washing of leek boils down to an amount of 300 litres of water per hour being used up compared with the 30,000 litres of water per hour that were used previously. This means a saving of as much as 237,600 litres of water per eight hours. It is noted that the invention has a very wide range of applications, as will be explained in more detail yet, wherein in particular bulb growing, fruit and vegetable growing, shower cubicles, carwashes, dishwashers and washing machines, industrial washing plants and machine cleaning plants may be considered.

International patent publication No. WO 96/33817 (Lawrence) describes a suds generator, wherein water under high pressure is supplied to a mixing chamber in a high-pressure mode, and is subsequently discharged via a discharge pipe and a high-pressure spray nozzle. Water and a soap solution under low pressure are supplied to the mixing chamber in a low-pressure mode, whilst air under high pressure is carried to the aqueous soap solution present in the mixing chamber through a perforated pipe. As a result of this suds are produced in the mixing chamber, which suds leave said mixing chamber via the discharge pipe and a low-pressure nozzle.

In one preferred embodiment of a method according to the invention the air pressure is at least 1 bar, preferably at least 1.5 bar. More in particular the air pressure can be regulated, preferably even steplessly so. A finely divided spray of water droplets is obtained by mixing the water with the thus pressurized air in the mixing chamber, whereby the consumption of water is minimized in an optimum manner without affecting the cleaning result.

In another preferred embodiment of the method according to the invention pressurized water is supplied to the mixing chamber at a predetermined pressure, downstream of the nozzle, whereby the water pressure can be regulated, preferably steplessly so. This makes it possible to adapt the shape and the size of the droplets and the water/air ratio to the conditions of the surface to be cleaned. Ideally the water pressure can be regulated independently of the air pressure.

In another preferred embodiment of a method according to the invention the air pressure and the water pressure are set to a ratio ranging between 2 : 1 and 1 : 2.

In another preferred embodiment of a method according to the invention the water is squirted against the surface in a spray of droplets, from a distance which is smaller than the distance at which the water becomes turbulent downstream of the nozzle. It has become apparent that the spray of droplets becomes turbulent at a particular distance from the nozzle, whereby there is no longer a water jet, but whereby the water droplets "float" as it were. In that case the water droplets no longer have an "impetus", as a result of which they are hardly able to remove dirt from the surface.

The invention also relates to a device for carrying out a method according to the invention, which is characterized in that it comprises a mixing chamber, at least one nozzle connected thereto, as well as means for supplying water, which may or may not be pressurized, and compressed air at a predetermined pressure, to the mixing chamber, which is upstream of the nozzle. More in particular the nozzle is present in a wall of the mixing chamber thereby, which mixing chamber preferably converges in the direction of the nozzle. The advantage of this is that the spray of fine water droplets is capable of exiting the nozzle at great force, whilst furthermore an optimum mixing of water and pressurized air is effected.

In one preferred embodiment of a device according to the invention means are provided for regulating the air pressure, preferably steplessly so, as well as means for regulating the water pressure, preferably steplessly so, in particular independently of the air pressure.

In another preferred embodiment of a device according to the invention the nozzle is movable, preferably the nozzle is mounted on a rotatable arm. This makes it possible to further reduce the distance between the nozzle and the surface to be cleaned, as a result of which the discharge of the dirt is further improved.

In another preferred embodiment of a device according to the invention the mixing chamber comprises a member which is capable of rotation under the influence of the water for rotatably squirting the water in a spray of droplets downstream of the nozzle. The rotating spray of water droplets results in an enlarged working area. Preferably the device is accommodated in a housing. This makes it possible to use a closed system, wherein used-up water may be caught and the surrounding area cannot be contaminated by a spray of water droplets. The recirculation of used water is an advantage per se, because less water is needed.

The invention also relates to a method and a device for cleaning flower bulbs, flower tubers or perennial plant(s) (parts), wherein the water pressure and the air pressure are set in accordance with claim 9.

The invention furthermore relates to a method and a device for cleaning soft fruit, in particular strawberries, grapes, plums, red currants, blueberries or peaches, according to any one of the preceding claims 1- 8, wherein the water pressure and the air pressure are set in accordance with claim 10.

The invention also relates to a method and a device for cleaning medium hard crops, in particular leek, asparagus, beans, stone leeks, paprikas, gherkins, cucumbers, cabbage varieties (cauliflower, white cabbage, green cabbage, red cabbage, etc.) or tomatoes, wherein the water pressure and the air pressure are set in accordance with claim 11.

The invention also relates to a method and a device for cleaning hard crops, in particular carrots, scorzoneras and rootstocks and/or fruit trees, stem crops and/or root crops for multiplication purposes, products stemming from the cultivation of onions and/or silver-skin onions or carrots, wherein the water pressure and the air pressure are set in accordance with claim 12.

The invention also relates to a method and a device for cleaning sugar beets, beetroots or potatoes, or the products stemming therefrom, in particular chips, pulp and cattle fodder products, wherein the water pressure and the air pressure are set in accordance with claim 13.

The invention also relates to a method and a device for cleaning roads, in particular porous asphalt, wherein the water pressure and the air pressure are set in accordance with claim 14. The method and the device are excellently suited for being used for cleaning roads fouled by cadavers.

The invention also relates to a method and a device for cleaning vehicles, in particular passenger cars in a car wash, trains, buses or lorries in special washing facilities, wherein the water pressure and the air pressure are set in accordance with claim 15.

The invention also relates to a method and a device for cleaning crockery, cutlery and the like in a dishwasher, and machines or tools in an industrial washing-up machine, wherein the water pressure and the air pressure are set in accordance with claim 16.

The invention also relates to a method and a device for cleaning persons, using a shower head, wherein the water pressure and the air pressure are set in accordance with claim 17. In this connection the use of nozzles/shower heads for cleaning purposes with accidents or calamities may be considered.

The invention also relates to a method and a device for cleaning hard surfaces, in particular facades of houses, industrial and commercial buildings, glass, plastics and metal, wherein the water pressure and the air pressure are set in accordance with claim 18.

The invention also relates to a method and a device for cleaning soft surfaces, in particular wool or fibrous materials, such as cotton, flax, textile, silk or paper, wherein the water pressure and the air pressure are set in accordance with claim 19.

It is explicitly noted that the above preferred uses of a method and a device according to the invention may form the subject matter of a divisional patent application.

The invention will be explained in more detail hereafter with reference to Figures illustrated in a drawing, which all relate to preferred variants, wherein:
- Figure 1 is a diagrammatic sectional view of a nozzle of a device according to the invention;
- Figure 2 corresponds with Figure 1, with the understanding that another embodiment of the nozzle is shown;
- Figure 3 is a sectional view of nozzles mounted on a rotatable arm;
- Figure 4 is a diagrammatic view of a device according to the invention;
- Figure 5 relates to a detail of Figure 4;
- Figure 6 is a diagrammatic view of an bulb re-washing machine according to the invention;
- Figure 7 is a diagrammatic plan view of a detail of a leek washing machine according to the invention;
- Figure 8 is a side view of a detail of Figure 7;
- Figure 9 is a diagrammatic sectional view of a carwash according to the invention;
- Figure 10 is a diagrammatic sectional view of a dishwasher according to the invention; and
- Figure 11 is a diagrammatic sectional view of a tumbler washing machine according to the invention.

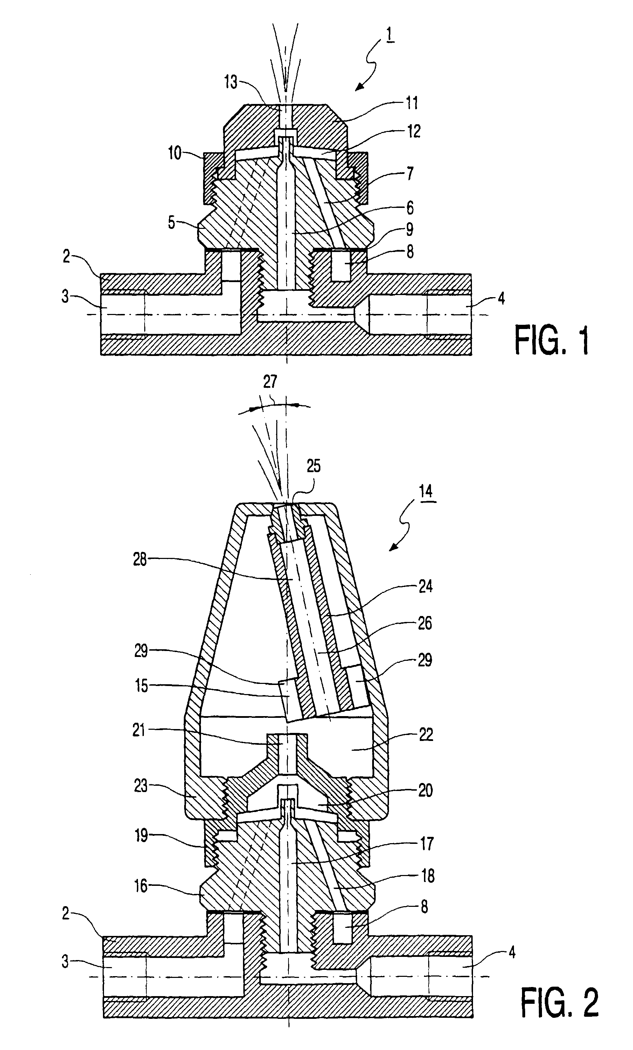

Figure 1 shows a spray nozzle 1, which consists of a connecting block 2 provided with an air connection 3 and a water connection 4. A nozzle housing 5 is screwed into connecting block 2. Nozzle housing 5 is provided with a water channel 6, which is in communication with water connection 4 when screwed into connecting block 2. Furthermore three air channels 7 in nozzle housing 5 connect to an annular chamber 8 in connecting block 2, which annular chamber 8 is in communication with air connection 3. A sealing ring 9 is present between connecting block 2 and nozzle housing 5. A pressure nozzle 11 is mounted on nozzle housing 5 by means of a fastening ring 10, whereby a mixing chamber 12 is formed between pressure nozzle 11 and nozzle housing 5. Pressure nozzle 11 is provided with an orifice 13.

Water is mixed with air in mixing chamber 12, with the mixture exiting via orifice 13, whereby a suitable selection of the air pressure and the water pressure causes the mixture to be atomized into fine droplets. When the air pressure is increased, the amount of water being sprayed will be reduced.

Upon testing of the spray exiting from orifice 13 in connection with the cleaning of objects, it has become apparent that the mixture of water and air, with the air being mixed with the water under high pressure, is excellently suited for cleaning objects. The dirt present on the objects comes off easily and can be washed away. During said spraying a spray of minute water droplets is formed, which droplets ensure that the dirt is penetrated everywhere and that the surface of the object is adequately moistened, as a result of which the dirt is washed away even when very small amounts of water are used. The cleaning action of the water is strongly enhanced, as a result of which much less water is used for the same degree of fouling.

Figure 2 shows a spray nozzle 14 with a rotating jet, whereby the jet exiting from nozzle 14 rotates about a central axis 15. A nozzle housing 16, which corresponds with nozzle housing 5 of Figure 1, is provided with a water channel 17 and an air channel 18. An intermediate ring 19 is screwed onto nozzle housing 19, thus forming a mixing chamber 20. Mixing chamber 20 comprises an opening 21 to a chamber 22, which is formed by a holder 23 and intermediate ring 19. A rotating member 24 is provided in chamber 22, which member comprises a wear-resistant part 25, which is supported in an opening of holder 23. Rotating member 24 is capable of rotation about a central axis 26, and when member 24 rolls on the inner wall of holder 23 whilst the wear-resistant part is supported in the opening of holder 23, central axis 26 will rotate about the central axis 15 of nozzle 14 with a spraying angle 27.

Rotating member 24 and wear-resistant part 26 are provided with a spray channel 28, and rotating member 24 is also provided with blades 29. Water flowing from opening 21 into chamber 22 strikes against the blades 29, causing rotating member 24 to rotate about central axis 15 and about central axis 26. The water exits chamber 22 through the spray channel 28. It has become apparent that the amount of water required for causing rotating member 24 to rotate about its axis will be strongly reduced when water mixed with air is caused to exit from opening 21. A second advantage is that nozzle 14 can be blown dry in a simple manner, thus eliminating the problem of rotating member 24 caking onto holder 23 and nozzle 14 becoming unusable. This air support makes it possible to use nozzle 14 over a larger working area.

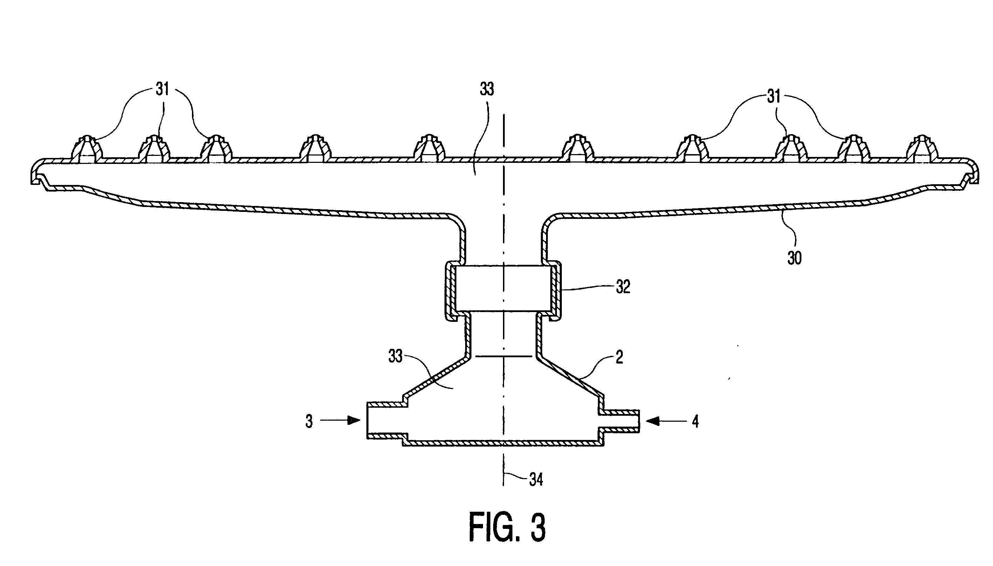

Figure 3 shows spray nozzles 31 mounted on a rotatable arm 30, which arm 30 is mounted on a connecting block 2 by means of a rotatable coupling 32. The air and water connections are indicated by numerals 3 and 4 respectively. The interior of the unit actually functions as a mixing chamber 33, which - in view of its large dimensions - ensures an ideal mixing of water with compressed air. Numeral 34 indicates the axis of rotation of arm 30.

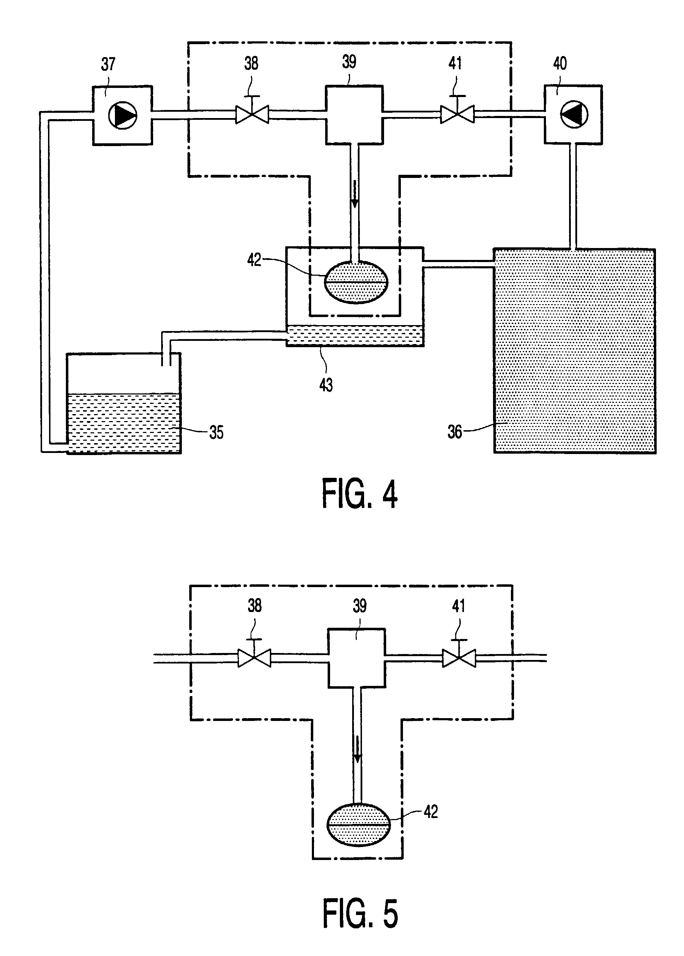

Figure 4 diagrammatically shows a device according to the invention, which comprises a water source 35 and an air source 36. Water is supplied to a mixing chamber 39 by means of a pump 37 and a pressure control valve 38, whilst pressurized air is likewise carried to mixing chamber 39 via a pump 40 and a pressure control valve 41. Furthermore a spray nozzle 42 is provided, which - unlike the situation shown in the drawing - is disposed in a wall of mixing chamber 39. Nozzle 42 is accommodated in a separate housing 43, so that this is a closed system, wherein water can be reused and contamination of the surrounding area by the spray of water droplets from nozzle 42 is not possible.

Figure 5 is a larger-scale view of the detail shown in the box of Figure 4.

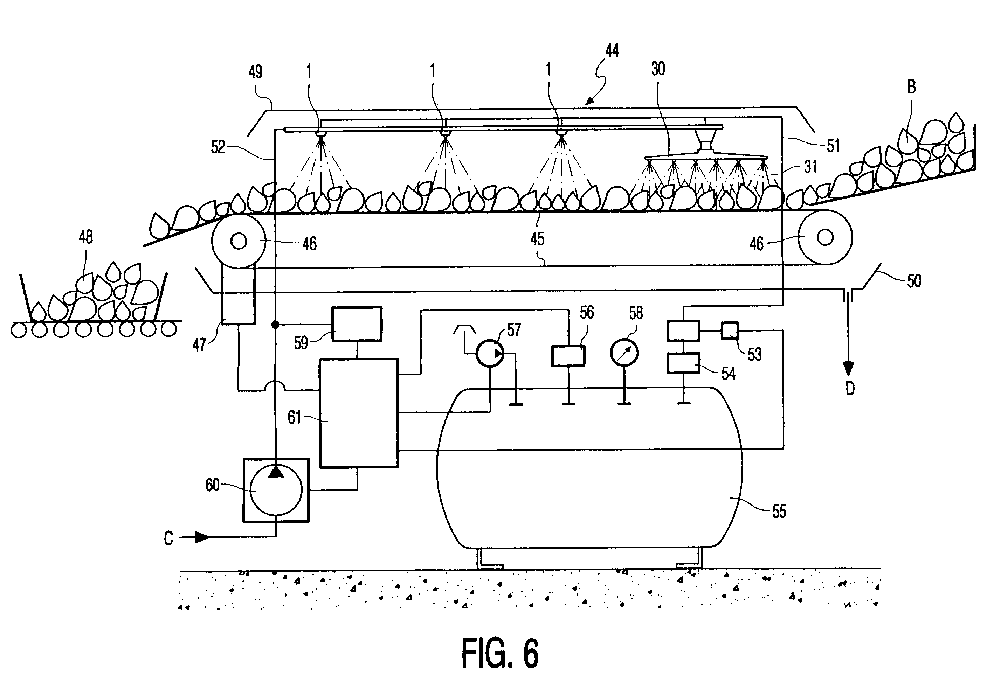

Figure 6 shows a bulb re-washing machine 44, in which contaminations in the form of loose earth or sand are removed from bulbs B, for example tulip bulbs, hyacinth bulbs and the like, by washing said bulbs with water. Bulbs B are placed on a screen belt 45 via a chute. screen belt 45 is passed over pulleys 46, which are driven by a drive unit 47. The velocity of the screen belt 45 can be controlled steplessly, it will for example amount to 5 m/min. The velocity is set in such a manner that one to three layers of bulbs B are present on the belt, depending on the type of bulbs (dimensions). The layer of bulbs must not be much thicker than 0,05 m, in order to ensure a proper discharge of dirt by spraying. At the end of screen belt 45 the cleaned bulbs 48 are caught in a container.

Three rows of respectively two spray nozzles 1 according to Figure 1 and one row of two arms 30 comprising spray nozzles 31 according to Figure 3 are disposed under a cover 49 above screen belt 45, which is about 1 m wide, which spray nozzles spray in the direction of screen belt 45. The distance between the nozzles and screen belt 45 is about 0.20 - 0.30 m. A receptacle 50 is disposed under screen belt 45, in which the spray medium and the washed-off dirt are caught and discharged via a drain D.

Nozzles 1 and 31 are connected to an air pipe 51 and a water pipe 52. Air pipe 51 is connected to a pressure vessel 55 via an electrically controlled valve 53 and an adjustable pressure reducing valve 54. Pressure vessel 55 is maintained at a pressure set in a pressure switch 56 by means of a compressor 57. Pressure vessel 55 is furthermore fitted with a manometer 58. Water pipe 52 is connected to a pressurization unit 60 via an electrically controlled valve 59. Pressurization unit 60 is connected to a water supply C and may be set to various pressure values in a manner which is known per se.

The water consumption at water supply C is about 900 - 3500 litres per hour when a water pressure of 4 - 8 bar is used and an air pressure of likewise 4 - 8 bar and the consumption of air is 1.5 - 2 m³. In that case the washing capacity of the device will be 10 m³ of bulbs per hour at a belt velocity of 5 m/min. The various components of the bulb re-washing machine 44 are controlled from a control box 61. The air pressure in pipe 51 is set manually by means of adjustable pressure reducing valve 54, and the water pressure in pipe 52 may be set by means of a control valve (not shown) in pressurization unit 60.

When spraying is carried out with air support very fine droplets are formed at nozzles 1 and 31, as a result of which all bulbs are properly moistened and a flow of water is created on the bulbs. It has become apparent thereby that it is not necessary for the bulbs to be hit directly by a jet of water from nozzles 1 and 31 in order to create a flow of water discharging the dirt. The atomized fine droplets fall on the bulbs to be cleaned and transport the dirt to receptacle 50. Since the water is mixed with air, the jet of water being squirted from the nozzle orifice is not hard, so that no damage will be caused to bulbs B, not even to the bulbs that are passed right under nozzles 1 and 31.

The pressure of the water and of the air can be varied by adjusting the valves, which makes it possible to adapt the cleaning operation to the type of dirt, for example the soil type, and the amount of dirt to be removed.

Besides the embodiment shown herein it is also possible to catch the water being discharged at drain B in a container having a capacity of for example 2 - 3 m³, and to recirculate the water. In that case the earth or the other dirt being washed off the bulbs will remain behind in the tank as sediment.

In another embodiment of the machine spray nozzles 1 and 31 may be mounted on rotating arms, as a result of which the bulbs present on screen belt 45 will be sprayed from a short distance, which further enhances the cleaning effect.

Minor adaptations will make the bulb re-washing machine shown in Figure 6 suitable for cleaning/washing other products in the agricultural sector as well, such as carrots, leek, celery and the like, and also for potatoes, for example. All these products must be made ready for consumption by washing, whereby inter alia dirt is removed from the products and no damage must be caused to the products.

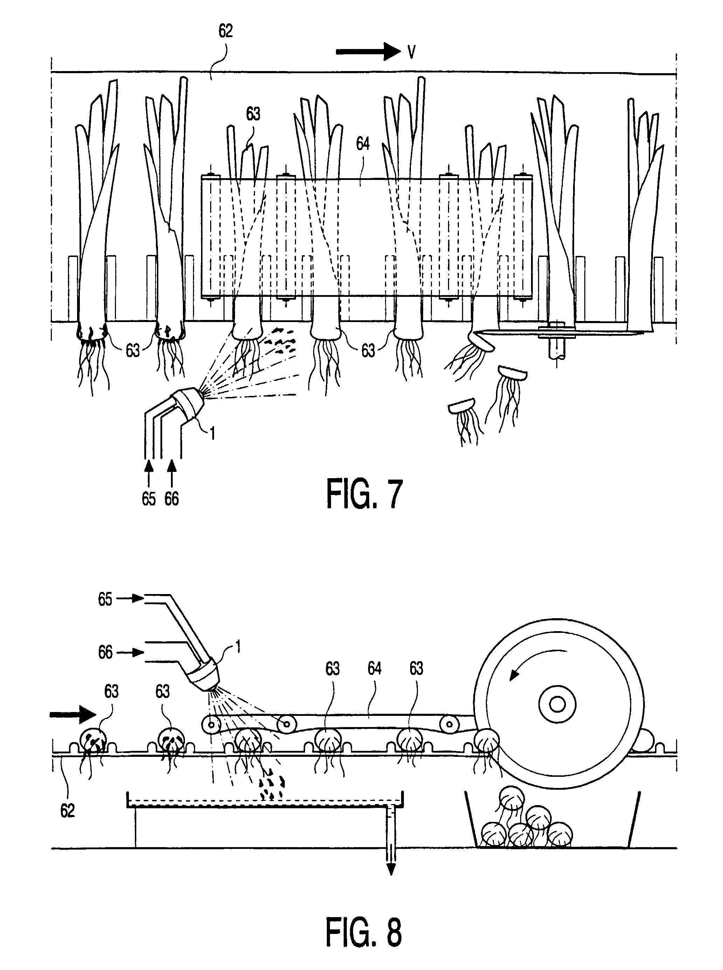

Figure 7 is a plan view of a detail of a leek washing machine, showing in particular the location at which the roots are cleaned. The Figure shows a toothed belt 62 with a tooth pitch of 5 cm, which is capable of movement in direction of transport V. Leeks 63 are present on the toothed belt, whereby they may be locally clamped (in a manner not shown) between toothed belt 62 and a conveyor belt 64 running above said toothed belt. Leeks 63 pushed with their roots against a stop plate, which is done manually or possibly by means of a pressure roller. The roots, which are 0.06 m long, are cut from the leeks 63 by mechanical means, and two to four bracts are removed. The capacity of the leek washing machine is about 1.2 tonnes of leek per hour, the velocity of the belt in the direction of transport V is about 5 m/min.

During this automatic process the contaminations, such as earth, are washed off the leeks with water. This water is contaminated with the washed-off earth and with juices being exuded by the plant, it may not be discharged into the surface water just like that, which is why it is caught. In addition to that the water and the discharging cost money. In order to keep the water consumption as low as possible, nozzles 1 connected to an air pipe 65 and a water pipe 66 are used. Nozzles 1 correspond with the nozzles shown in Figure 1. When nozzles 1 are also provided with an air supply, the water consumption in the leek washing machine is reduced from 15,000 l/hour to 300 l/hour when using a water pressure of 4 - 8 bar distributed over six nozzles 1. The required amount of air is 1,500 l/min when using an air pressure of 4 - 8 bar. Since the jet produced by nozzle 1 is greatly mixed with air, said jet will be soft and the leeks will not be damaged.

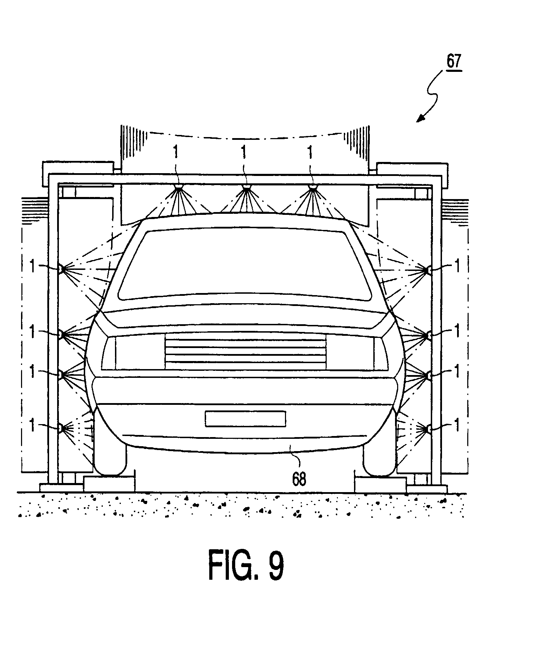

Figure 9 is a diagrammatic sectional view of a carwash 67 according to the invention, wherein a passenger car 68 is being cleaned by spray nozzles 1 according to Figure 1, which are disposed at various angles in the ceiling and in the side walls of the carwash. The water saving may even be a more important factor with carwashes, since they use the more expensive osmosis water, which does not leave behind any water stains on the car paint. According to the invention the water-based car paint is additionally spared.

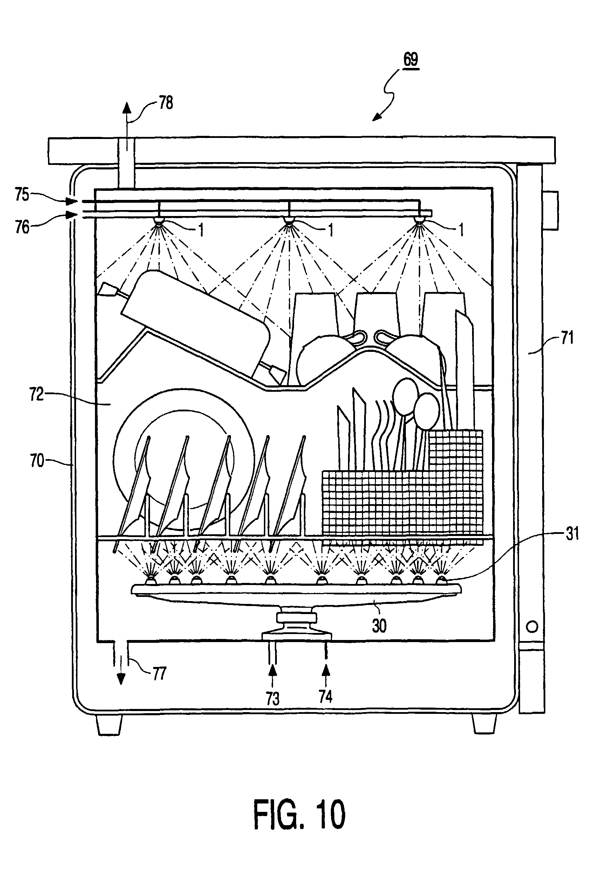

Figure 10 shows a dishwasher 69, which constitutes a washing space 72 comprising a cabinet 70 and a door 71. Objects to be cleaned are placed in washing space 72 in a manner known per se. The dishwasher furthermore comprises all the other components which are known for such a machine, in so far as they are not described as being different hereafter.

In the illustrated embodiment a rotatable arm 30 fitted with spray nozzles 31 is shown at the bottom of washing space 72, which arm is capable of movement about an axis, as is shown in Figure 3. Rotatable arm 30 fitted with spray nozzles 31 is connected to a water pipe 73 and to an air pipe 74. Water and air being supplied mix inside arm 30, and are squirted, in the manner already indicated above, from the orifices of the rotatable arm 30 fitted with nozzles 31, as a result of which a finely divided spray is formed. The amount of water being used for forming said spray is considerably lower than usual, since the droplets being formed are much smaller as a result of the mixing of water and air, so that the objects to be cleaned are moistened more adequately while using less water.

In accordance with another embodiment of the invention rotatable arm 30 may also be fitted with spray nozzles which correspond with the spray nozzle 1 shown in Figure 1.

Spray nozzles 1 are mounted at the top of washing space 72, which nozzles correspond with the spray nozzles shown in Figure 1. Said nozzles are connected, in a manner already indicated above, to a water supply and to an air supply by means of a water pipe 75 and an air pipe 76. Besides the illustrated embodiment comprising the washing space 72 at the bottom, a rotatable arm fitted with nozzles 31, and fixed nozzles at the top, also other embodiments are possible, wherein all nozzles are fixed, or wherein all nozzles are mounted on rotatable arms, whilst also intermediate forms are possible, depending on the desired washing result and the dimensions of the washing space 72.

A drain 77 is provided at the bottom of washing space 72, which drain is connected to a pump (not shown) comprising a screen, by means of which the washing water is pumped into water pipes 73 and 75, causing said washing to circulate. Since the nozzles operate with support air, in order to obtain a fine spray, the nozzle orifices (see Figure 1) are relatively large, so that there will be no clogging and the screen present at the pump may be relatively coarse.

A breather duct 78 is provided at the top of washing space 72, through which the air supplied via the nozzles can exit the washing space again. This breather channel may be connected, in a manner not shown, to the intake of the compressor (not shown), as a result of which air pipes 74 and 76 are supplied with air, so that there will be recirculation of the air. In addition to using air for atomizing the water into extra fine droplets, it is also possible to use the air supply when no water is being supplied. As a result of this the objects present in washing space 72 will be dried extra quickly.

In one preferred embodiment the dishwasher only comprises spray nozzles 1 according to the invention in door 71.

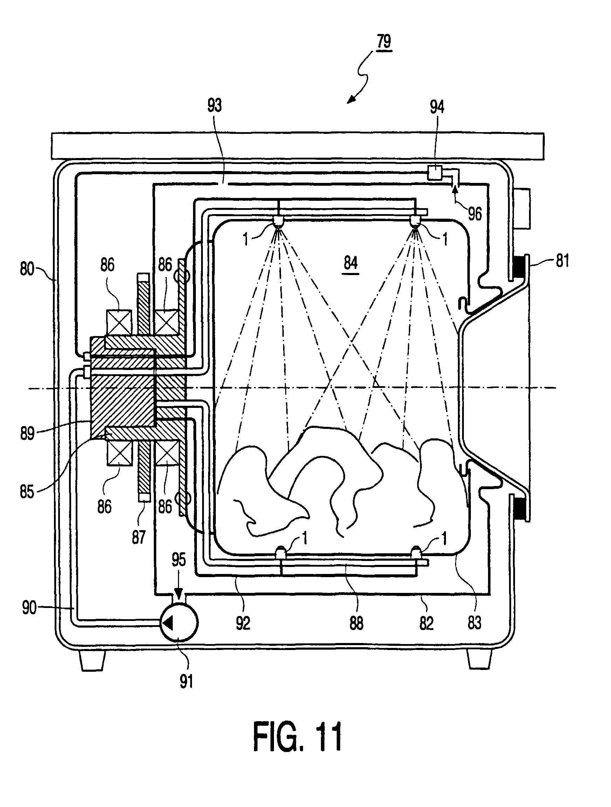

Figure 11 shows a tumbler washing machine 79 comprising a housing 80 provided with a door 81. Disposed within housing 80 is a tub 82, in which a rotating drum 83 provided with perforations is present. The inside of rotating drum 83 forms a washing space 84. Tub 82 and rotating drum 83 may contain an amount of water, whereby the water level is sufficiently high for immersing the laundry present in drum 83. Rotating drum 83 is attached to rotating shaft 85, which runs in bearings 86, and which is provided with a pulley 87, by means of which said shaft can be driven. Tumbler washing machine 79 furthermore comprises all the other components which are known for such a machine, in so far as they are not described as being different hereafter.

Spray nozzles 1 corresponding with the nozzles shown in Figure 1 are mounted on the inside of drum 83. Nozzles 1 are connected to a pump 91 via a water pipe 88, a connecting block 89 and a water pipe 90. Spray nozzles 1 are also connected to a compressor 94 via an air pipe 92, connecting block 89 and air pipe 93. Mounting air-supported nozzles 1 makes it possible to produce a fine spray therein, which moistens the laundry in an excellent manner, which enhances the washing effect. Pump 91 is connected to tub 82 via a drain 95, as a result of which the water can circulate via nozzles 1. Compressor 94 is also connected to tub 82 via an exhaust opening 96, as a result of which of which the air being released by nozzles 1 need to exit housing 80.

Various embodiments of connecting block 89 are possible. According to a first embodiment of connecting block 89, pipes 92 and 88 in rotating drum 83 are connected to corresponding pipes 93 and 90 at all times, whereby nozzles 1 attempt to squirt out water constantly, even if they partly blocked by laundry or water present in the drum. According to a second embodiment of connecting block 89 only the air pipes 93 and 92 are in communication with each other at all times, whereby the air exiting from nozzle 1 into the water when said nozzle is submerged will cause additional stirring and produce an additional washing effect, whilst the capacity of pump 91 may be smaller. According to a third embodiment of connecting block 89 only the pipes 92 and 88 of the nozzles 1 present above the laundry are connected to pipes 93 and 90. In this manner a spray is produced by nozzles 1 by using a pump 91 and a compressor 94 which have a relatively small capacity. This atomization of the washing water provides an improved washing effect.

By using nozzles 1 an atmosphere of minute droplets is produced in washing space 72 during washing, thus providing an improved washing effect. When this is done by means of air-supported nozzles, said minute droplets are produced at a lower water flow and with relatively large nozzle orifices, as a result of which recirculation of the washing water is possible without clogging. In order to prevent clogging or caking up of said orifices control means may turn on or maintain the air flow through nozzles 1 after the washing operation has been completed, so that contaminations and water are blown out of the nozzles.

In another simple embodiment of the washing machine according to the invention the nozzles are mounted in the door.

Another embodiment of the invention (not shown) consists of the use of the air-supported nozzle in a shower, whereby the cleaning and dirt-discharging effect is retained at a lower water consumption. Such nozzles may also be suitably used in other situations, where the use of water must be limited or where the water is caught in order to be reused in the above-described carwashes. The embodiments which have been discussed in the various examples may be used in various combinations thereof, whereby it becomes apparent in every instance that the water consumption can be strongly reduced by carrying out the cleaning and washing operations with nozzles which are suitable for a mixture of air and water.

The invention is not limited to the preferred variants discussed in the Figures, it also extends to other variants that fall within the scope of the invention.

## Claims

1. A method for cleaning a dirty surface, wherein water is squirted against the dirty surface in order to wash away the dirt with the water, wherein the water and compressed air are mixed, after which the water is squirted against the dirty surface in a spray of droplets, **characterized in that** use is made of a nozzle device having coaxial bores, the upstream wider portion of which serving as a mixing chamber wherein the water and the compressed air are mixed and wherein the mixture obtained has an overpressure relative to the environment, and the downstream narrower portion of which acting as a fluid port.

2. A method according to claim 1, wherein the fluid port is a nozzle, wherein the spray of droplets is squirted against the dirty surface downstream of the nozzle.

3. A method according to claim 1, wherein the fluid port leads to a second chamber having a nozzle, wherein the spray of droplets is squirted against the dirty surface downstream of the nozzle.

4. A method according to claim 1, 2 or 3, wherein the air pressure is at least 1 bar, preferably at least 1.5 bar.

5. A method according to any one of the preceding claims 1-4, wherein the air pressure can be regulated, in particular steplessly so.

6. A method according to any one of the preceding claims 1-5, wherein pressurized water is supplied to the mixing chamber at a predetermined pressure, downstream of the nozzle.

7. A method according to claim 6, wherein the water pressure can be regulated, preferably steplessly so.

8. A method according to claim 7, wherein the water pressure can be regulated independently of the air pressure.

9. A method according to any one of the preceding claims 1 - 8, wherein the air pressure and the water pressure are set to a ratio ranging between 2 : 1 and 1 : 2.

10. A method according to any one of the preceding claims 1 - 9, wherein the water is squirted against the surface in a spray of droplets, from a distance which is smaller than the distance at which the water becomes turbulent downstream of the nozzle.

11. A method for cleaning flower bulbs, flower tubers or perennial plant(s) (parts) according to any one of the preceding claims 1 - 10, wherein the water pressure and the air pressure are set as follows:
| | |
|---|---|
| water pressure (bar) | air pressure (bar, as an overpressure relative to the water pressure) |
| from 0.5 to 1.5 | from 8 to 8.5 |
| from 1.5 to 3 | from 7.5 to 8 |
| from 2.8 to 4.2 | from 5.5 to 6 |
| from 4 to 6.2 | from 5 to 5.5 |
| from 6 to 10 | from 3.5 to 4 or from 4 to 4.5 or from 4.5 to 5 or from 5 to 5.5 or from 5.5 to 6 or from 6 to 6.5, |

12. A method for cleaning soft fruit, in particular strawberries, grapes, plums, red currants, blueberries or peaches, according to any one of the preceding claims 1 - 10, wherein the water pressure and the air pressure are set as follows:
| | |
|---|---|
| water pressure (bar) | air pressure (bar, as an overpressure relative to the water pressure) |
| 0 to 0.5 | 1.5 to 2 or from 2 to 2.5 |
| 0.5 to 1.5 | 1.5 to 2 or from 2 to 2.5. |

13. A method for cleaning medium hard crops, in particular leek, asparagus, beans, stone leeks, paprikas, gherkins, cucumbers, cabbage varieties (cauliflower, white cabbage, green cabbage, red cabbage, etc.) or tomatoes, according to any one of the preceding claims 1 - 10, wherein the water pressure and the air pressure are set as follows:
| | |
|---|---|
| water pressure (bar) | air pressure (bar, as an overpressure relative to the water pressure) |
| from 2.8 to 4.2 | from 6.5 to 7 or from 7 to 7.5 or from 7.5 to 8 or from 8 to 8.5 or from 8.5 to 9 or from 9 to 9.5 |
| from 4 to 6.2 | from 6.5 to 7 or from 7 to 7.5 or from 7.5 to 8 or from 8 to 8.5 or from 8.5 to 9 or from 9 to 9.5 |
| from 6 to 10 | from 6.5 to 7 or from 7 to 7.5 or from 7.5 to 8 or from 8 to 8.5 or from 8.5 to 9 or from 9 to 9.5. |

14. A method for cleaning hard crops, in particular carrots, scorzoneras and rootstocks and/or fruit trees, stem crops and/or root crops for multiplication purposes, products stemming from the cultivation of onions and/or silver-skin onions or carrots according to any one of the preceding claims 1 - 10, wherein the water pressure and the air pressure are set as follows:
| | |
|---|---|
| water pressure (bar) | air pressure (bar, as an overpressure relative to the water pressure) |
| from 2.8 to 4.2 | from 9.5 to 10 or from 10 to 15 or from 15 to 20 |
| from 4 to 6.2 | from 9.5 to 10 or from 10 to 15 or from 15 to 20 |
| from 6 to 10 | from 9.5 to 10 or from 10 to 15 or from 15 to 20. |

15. A method for cleaning sugar beets, beetroots or potatoes, or the products stemming therefrom, in particular chips, pulp and cattle fodder products according to any one of the preceding claims 1 - 10, wherein the water pressure and the air pressure are set as follows:
| | |
|---|---|
| water pressure (bar) | air pressure (bar, as an overpressure relative to the water pressure) |
| from 6 to 10 | from 4 to 4.5 or from 4.5 to 5 or from 5 to 5.5 or from 5.5 to 6 or from 6 to 6.5 or from 6.5 to 7 or from 7 to 7.5 or from 7.5 to 8 or from 8 to 8.5 or from 8.5 to 9 or from 9 to 9.5 or from 9.5 to 10 or from 10 to 15 or from 15 to 20. |

16. A method for cleaning roads, in particular porous asphalt, according to any one of the preceding claims 1 - 10, wherein the water pressure and the air pressure are set as follows:
| | |
|---|---|
| water pressure (bar) | air pressure (bar, as an overpressure relative to the water pressure) |
| from 6 to 10 | from 7 to 7.5 or from 7.5 to 8 or from 8 to 8.5 or from 8.5 to 9 or from 9 to 9.5 or from 9.5 to 10 or from 10 to 15 or from 15 to 20. |

17. A method for cleaning vehicles, in particular passenger cars in a car wash, trains, buses or lorries in special washing facilities, according to any one of the preceding claims 1 - 10, wherein the water pressure and the air pressure are set as follows:
| | |
|---|---|
| water pressure (bar) | air pressure (bar, as an overpressure relative to the water pressure) |
| from 0.5 to 1.5 | from 2.5 to 3 or from 3 to 3.5 or from 3.5 to 4 or from 4 to 4.5 or from 4.5 to 5 or from 5 to 5.5 or from 5.5 to 6. |

18. A method for cleaning crockery, cutlery and the like in a dishwasher, and machines or tools in an industrial washing-up machine, according to any one of the preceding claims 1 - 10, wherein the water pressure and the air pressure are set as follows:
| | |
|---|---|
| water pressure (bar) | air pressure (bar, as an overpressure relative to the water pressure) |
| from 0.5 to 1.5 | from 4.5 to 5 or from 5 to 5.5 or from 5.5 to 6 or from 6 to 6.5 or from 6.5 to 7 or from 7 to 7.5 or from 7.5 to 8. |

19. A method for cleaning persons, using a shower head, according to any one of the preceding claims 1 - 10, wherein the water pressure and the air pressure are set as follows:
| | |
|---|---|
| water pressure (bar) | air pressure (bar, as an overpressure relative to the water pressure) |
| from 0.5 to 1.5 | from 1.5 to 2 or from 2 to 2.5 or from 2.5 to 3 or from 3 to 3.5 or from 3.5 to 4 or from 4 to 4.5 or from 4.5 to 5 |
| from 1.5 to 3 | from 1.5 to 2 or from 2 to 2.5 or from 2.5 to 3 or from 3 to 3.5 or from 3.5 to 4 or from 4 to 4.5 or from 4.5 to 5. |

20. A method for cleaning hard surfaces, in particular facades of houses, industrial and commercial buildings, glass, plastics and metal, according to any one of the preceding claims 1 - 10, wherein the water pressure and the air pressure are set as follows:
| | |
|---|---|
| water pressure (bar) | air pressure (bar, as an overpressure relative to the water pressure) |
| from 6 to 10 | from 9.5 to 10 or from 10 to 15 or from 15 to 20. |

21. A method for cleaning soft surfaces, in particular wool or fibrous materials, such as cotton, flax, textile, silk or paper, according to any one of the preceding claims 1 - 10, wherein the water pressure and the air pressure are set as follows:
| | |
|---|---|
| water pressure (bar) | air pressure (bar, as an overpressure relative to the water pressure) |
| from 2.8 to 4.2 | from 6.5 to 7 or from 7 to 7.5 or from 7.5 to 8 or from 8 to 8.5 or from 8.5 to 9 or from 9 to 9.5 |
| from 4 to 6.2 | from 6.5 to 7 or from 7 to 7.5 or from 7.5 to 8 or from 8 to 8.5 or from 8.5 to 9 or from 9 to 9.5 |
| from 6 to 10 | from 6.5 to 7 or from 7 to 7.5 or from 7.5 to 8 or from 8 to 8.5 or from 8.5 to 9 or from 9 to 9.5 |

22. A device for carrying out a method according to any one of the preceding claims 1 - 21, characterized in that it comprises
a nozzle device having coaxial bores, the upstream wider portion of which serving as a mixing chamber and the downstream narrower portion of which acting as fluid port being a nozzle or leading to a second chamber having a nozzle and
means for supplying water, which may or may not be pressurized, and compressed air at a predetermined pressure to the mixing chamber.

23. A device according to claim 22, wherein the nozzle is present in a wall of the mixing chamber.

24. A device according to claim 22 or 23, wherein the mixing chamber preferably converges in the direction of the nozzle.

25. A device according to claim 22, 23 or 24, wherein means are provided for regulating the air pressure, preferably steplessly so, as well as means for regulating the water pressure, preferably steplessly so, in particular independently of the air pressure.

26. A device according to any one of the preceding claims 22 - 25, wherein the nozzle is movable, and wherein the nozzle is preferably mounted on a rotatable arm.

27. A device according to any one of the preceding claims 22 - 25, wherein the second chamber comprises a member which is capable of rotation under the influence of the water for rotatably squirting the water in a spray of droplets downstream of the nozzle.

28. A device according to any one of the preceding claims 22 - 27, wherein the device is accommodated in a housing.

29. A device for cleaning flower bulbs, flower tubers or perennial plant(s)(parts) according to any one of the preceding claims 22 - 28 for carrying out the method according to claim 11.

30. A device for cleaning soft fruit, in particular strawberries, grapes, plums, red currants, blueberries or peaches, according to any one of the preceding claims 22 - 28 for carrying out the method according to claim 12.

31. A device for cleaning medium hard crops, in particular leek, asparagus, beans, stone leeks, paprikas, gherkins, cucumbers, cabbage varieties (cauliflower, white cabbage, green cabbage, red cabbage, etc.) or tomatoes, according to any one of the preceding claims 22 - 28 for carrying out the method according to claim 13.

32. A device for cleaning hard crops, in particular carrots, scorzoneras and rootstocks and/or fruit trees, stem crops and/or root crops for multiplication purposes, products stemming from the cultivation of onions and/or silver-skin onions or carrots according to any one of the preceding claims 22 - 28 for carrying out the method according to claim 14.

33. A device for cleaning sugar beets, beetroots or potatoes, or the products stemming therefrom, in particular chips, pulp and cattle fodder products according to any one of the preceding claims 22 - 28 for carrying out the method according to claim 15.

34. A device for cleaning roads, in particular porous asphalt, according to any one of the preceding claims 22 - 28 for carrying out the method according to claim 16.

35. A device for cleaning vehicles, in particular passenger cars in a car wash, trains, buses or lorries in special washing facilities, according to any one of the preceding claims 22 - 28 for carrying out the method according to claim 17.

36. A device for cleaning crockery, cutlery and the like in a dishwasher, and machines or tools in an industrial washing-up machine, according to any one of the preceding claims 22 - 28 for carrying out the method according to claim 18.

37. A device for cleaning persons, using a shower head, according to any one of the preceding claims 22 - 28 for carrying out the method according to claim 19.

38. A device for cleaning hard surfaces, in particular facades of houses, industrial and commercial buildings, glass, plastics and metal, according to any one of the preceding claims 22 - 28 for carrying out the method according to claim 20.

39. A device for cleaning soft surfaces, in particular wool or fibrous materials, such as cotton, flax, textile, silk or paper, according to any one of the preceding claims 22 - 28 for carrying out the method according to claim 21.

## Patentansprüche

1. Verfahren zum Reinigen einer verschmutzten Oberfläche, wobei Wasser gegen die verschmutzte Oberfläche gespritzt wird, um den Schmutz mit dem Wasser abzuwaschen, wobei das Wasser mit Druckluft gemischt wird, wonach das Wasser in einem Sprühstrahl von Tröpfchen gegen die verschmutzte Oberfläche gespritzt wird, dadurch gekennzeichnet, daß eine Düsenvorrichtung mit koaxialen Bohrungen verwendet wird, deren stromauf angeordneter weiterer Abschnitt als Mischkammer dient, in der das Wasser und die Druckluft gemischt werden und in der die erhaltene Mischung einen Überdruck relativ zu der Umgebung aufweist, und deren stromab angeordneter, engerer Abschnitt als Fluidöffnung dient.

2. Verfahren nach Anspruch 1, dadurch gekennzeichnet, daß die Fluidöffnung eine Düse ist, wobei der Sprühstrahl von Tröpfchen gegen die verschmutzte Oberfläche stromab der Düse gespritzt wird.

3. Verfahren nach Anspruch 1, dadurch gekennzeichnet, daß die Fluidöffnung zu einer zweiten Kammer führt, die eine Düse aufweist, wobei der Sprühstrahl von Tröpfchen gegen die verschmutzte Oberfläche stromab der Düse gespritzt wird.

4. Verfahren nach Anspruch 1, 2 oder 3, dadurch gekennzeichnet, daß der Luftdruck zumindest 1 bar beträgt, vorzugsweise zumindest 1,5 bar.

5. Verfahren nach einem der vorangehenden Ansprüche 1 bis 4, dadurch gekennzeichnet, daß der Luftdruck reguliert werden kann, und zwar vorzugsweise stufenlos.

6. Verfahren nach einem der vorangehenden Ansprüche 1 bis 5, dadurch gekennzeichnet, daß unter Druck stehendes Wasser der Mischkammer bei einem vorbestimmten Druck zugeführt wird, stromab der Düse.

7. Verfahren nach Anspruch 6, dadurch gekennzeichnet, daß der Wasserdruck reguliert werden kann, und zwar vorzugsweise stufenlos.

8. Verfahren nach Anspruch 7, dadurch gekennzeichnet, daß der Wasserdruck unabhängig von dem Luftdruck reguliert werden kann.

9. Verfahren nach einem der vorangehenden Ansprüche 1 bis 8, dadurch gekennzeichnet, daß der Luftdruck und der Wasserdruck auf ein Verhältnis eingestellt sind, das im Bereich zwischen 2:1 und 1:2 liegt.

10. Verfahren nach einem der vorangehenden Ansprüche 1 bis 9, dadurch gekennzeichnet, daß das Wasser gegen die Oberfläche in einem Sprühstrahl von Tröpfchen gespritzt wird, aus einem Abstand, der kleiner ist als der Abstand, in dem das Wasser stromab der Düse turbulent wird.

11. Verfahren zum Reinigen von Blumenzwiebeln, Blumenknollen oder mehrjährigen Pflanzen bzw. Teilen davon nach einem der vorangehenden Ansprüche 1 bis 10, dadurch gekennzeichnet, daß der Wasserdruck und der Luftdruck wie folgt eingestellt sind:
| | |
|---|---|
| Wasserdruck (bar) | Luftdruck (bar, als Überdruck relativ zu dem Wasserdruck) |
| von 0,5 bis 1,5 | von 8 bis 8,5 |
| von 1,5 bis 3 | von 7,5 bis 8 |
| von 2,8 bis 4,2 | von 5,5 bis 6 |
| von 4 bis 6,2 | von 5 bis 5,5 |
| von 6 bis 10 | von 3,5 bis 4 oder von 4 bis 4,5 oder von 4,5 bis 5 oder von 5 bis 5,5 oder von 5,5 bis 6 oder von 6 bis 6,5. |

12. Verfahren zum Reinigen von weichem Obst, insbesondere von Stachelbeeren, Trauben, Pflaumen, roten Johannisbeeren, Blaubeeren oder Pfirsichen, nach einem der vorangehenden Ansprüche 1 bis 10, dadurch gekennzeichnet, daß der Wasserdruck und der Luftdruck wie folgt eingestellt sind:
| | |
|---|---|
| Wasserdruck (bar) | Luftdruck (bar, als Überdruck relativ zu dem Wasserdruck) |
| 0 bis 0,5 | 1,5 bis 2 oder von 2 bis 2,5 |
| 0.5 bis 1,5 | 1,5 bis 2 oder von 2 bis 2,5. |

13. Verfahren zum Reinigen mittelharter Feldfrüchte, insbesondere Lauch, Spargel, Bohnen, Paprika, Essiggurken, Salatgurken, Kohlsorten (Blumenkohl, Weißkohl, Grünkohl, Rotkohl usw.) oder Tomaten, nach einem der vorangehenden Ansprüche 1 bis 10, dadurch gekennzeichnet, daß der Wasserdruck und der Luftdruck wie folgt eingestellt sind:
| | |
|---|---|
| Wasserdruck (bar) | Luftdruck (bar, als Überdruck relativ zu dem Wasserdruck) |
| von 2,8 bis 4,2 | von 6,5 bis 7 oder von 7 bis 7,5 oder von 7,5 bis 8 oder von 8 bis 8,5 oder von 8,5 bis 9 oder von 9 bis 9,5 |
| von 4 bis 6,2 | von 6,5 bis 7 oder von 7 bis 7,5 oder von 7,5 bis 8 oder von 8 bis 8,5 oder von 8,5 bis 9 oder von 9 bis 9,5 |
| von 6 bis 10 | von 6,5 bis 7 oder von 7 bis 7,5 oder von 7,5 bis 8 oder von 8 bis 8,5 oder von 8,5 bis 9 oder von 9 bis 9,5. |

14. Verfahren zum Reinigen harter Feldfrüchte, insbesondere Karotten, Wurzelstöcke und/oder Obstbäume, Halmfrüchte und/oder Wurzelfrüchte für Vermehrungszwecke, Erzeugnisse, die aus dem Anbau von Zwiebeln und/oder Silberhautzwiebeln oder Karotten stammen, nach einem der vorangehenden Ansprüche 1 bis 10, dadurch gekennzeichnet, daß der Wasserdruck und der Luftdruck wie folgt eingestellt sind:
| | |
|---|---|
| Wasserdruck (bar) | Luftdruck (bar, als Überdruck relativ zu dem Wasserdruck) |
| von 2,8 bis 4,2 | von 9,5 bis 10 oder von 10 bis 15 oder von 15 bis 20 |
| von 4 bis 6.2 | von 9,5 bis 10 oder von 10 bis 15 oder von 15 bis 20 |
| von 6 bis 10 | von 9,5 bis 10 oder von 10 bis 15 oder von 15 bis 20. |

15. Verfahren zum Reinigen von Zuckerrüben, roter Beete oder Kartoffeln, oder der davon stammenden Erzeugnisse, insbesondere Chips, Brei und Viehfutterprodukte nach einem der vorangehenden Ansprüche 1 bis 10, dadurch gekennzeichnet, daß der Wasserdruck und der Luftdruck wie folgt eingestellt sind:
| | |
|---|---|
| Wasserdruck (bar) | Luftdruck (bar, als Überdruck relativ zu dem Wasserdruck) |
| von 6 bis 10 | von 4 bis 4,5 oder von 4,5 bis 5 oder von 5 bis 5,5 oder von 5,5 bis 6 oder von 6 bis 6,5 oder von 6,5 bis 7 oder von 7 bis 7,5 oder von 7,5 bis 8 oder von 8 bis 8,5 oder von 8,5 bis 9 oder von 9 bis 9,5 oder von 9,5 bis 10 oder von 10 bis 15 oder von 15 bis 20. |

16. Verfahren zum Reinigen von Straßen, insbesondere von porösem Asphalt, nach einem der vorangehenden Ansprüche 1 bis 10, dadurch gekennzeichnet, daß der Wasserdruck und der Luftdruck wie folgt eingestellt sind:
| | |
|---|---|
| Wasserdruck (bar) | Luftdruck (bar, als Überdruck relativ zu dem Wasserdruck) |
| von 6 bis 10 | von 7 bis 7,5 oder von 7,5 bis 8 oder von 8 bis 8,5 oder von 8,5 bis 9 oder von 9 bis 9,5 oder von 9,5 bis 10 oder von 10 bis 15 oder von 15 bis 20. |

17. Verfahren zum Reinigen von Fahrzeugen, insbesondere von Personenfahrzeugen in einer Fahrzeugwaschanlage, von Zügen, Bussen oder Lastkraftwagen in speziellen Wascheinrichtungen, nach einem der vorangehenden Ansprüche 1 bis 10, dadurch gekennzeichnet, daß der Wasserdruck und der Luftdruck wie folgt eingestellt sind:
| | |
|---|---|
| Wasserdruck (bar) | Luftdruck (bar, als Überdruck relativ zu dem Wasserdruck) |
| von 0,5 bis 1,5 | von 2,5 bis 3 oder von 3 bis 3,5 oder von 3.5 bis 4 oder von 4 bis 4.5 oder von 4,5 bis 5 oder von 5 bis 5,5 oder von 5,5 bis 6. |

18. Verfahren zum Reinigen von Geschirr, Besteck usw. in einem Geschirrspüler, und von Maschinen oder Werkzeugen in einer Industriewaschmaschine, nach einem der vorangehenden Ansprüche 1 bis 10, dadurch gekennzeichnet, daß der Wasserdruck und der Luftdruck wie folgt eingestellt sind
| | |
|---|---|
| Wasserdruck (bar) | Luftdruck (bar, als Überdruck relativ zu dem Wasserdruck) |
| von 0,5 bis 1,5 | von 4,5 bis 5 oder von 5 bis 5,5 oder von 5,5 bis 6 oder von 6 bis 6,5 oder von 6,5 bis 7 oder von 7 bis 7,5 oder von 7,5 bis 8. |

19. Verfahren zum Reinigen von Personen unter Verwendung eines Duschkopfs, nach einem der vorangehenden Ansprüche 1 bis 10, dadurch gekennzeichnet, daß der Wasserdruck und der Luftdruck wie folgt eingestellt sind:
| | |
|---|---|
| Wasserdruck (bar) | Luftdruck (bar, als Überdruck relativ zu dem Wasserdruck) |
| von 0,5 bis 1,5 | von 1,5 bis 2 oder von 2 bis 2,5 oder von 2,5 bis 3 oder von 3 bis 3,5 oder von 3,5 bis 4 oder von 4 bis 4,5 oder von 4,5 bis 5 |
| von 1,5 bis 3 | von 1,5 bis 2 oder von 2 bis 2,5 oder von 2,5 bis 3 oder von 3 bis 3,5 oder von 3,5 bis 4 oder von 4 bis 4,5 oder von 4,5 bis 5. |

20. Verfahren zum Reinigen harter Oberflächen, insbesondere Fassaden von Häusern, Industrie- und Geschäftsgebäuden, Glas, Kunststoff und Metall, nach einem der vorangehenden Ansprüche 1 bis 10, dadurch gekennzeichnet, daß der Wasserdruck und der Luftdruck wie folgt eingestellt sind:
| | |
|---|---|
| Wasserdruck (bar) | Luftdruck (bar, als Überdruck relativ zu dem Wasserdruck) |
| von 6 bis 10 | von 9,5 bis 10 oder von 10 bis 15 oder von 15 bis 20. |

21. Verfahren zum Reinigen von weichen Oberflächen, insbesondere von Wolle oder Fasermaterialien wie Baumwolle, Flachs, Stoff. Seide oder Papier, nach einem der vorangehenden Ansprüche 1 bis 10, dadurch gekennzeichnet, daß der Wasserdruck und der Luftdruck wie folgt eingestellt sind:
| | |
|---|---|
| Wasserdruck (bar) | Luftdruck (bar, als Überdruck relativ zu dem Wasserdruck) |
| von 2,8 bis 4,2 | von 6,5 bis 7 oder von 7 bis 7,5 oder von 7,5 bis 7 oder von 8 bis 8,5 oder von 8,5 bis 9 oder von 9 bis 9,5 |
| von 4 bis 6,2 | von 6,5 bis 7 oder von 7 bis 7,5 oder von 7,5 bis 8 oder von 8 bis 8,5 oder von 8,5 bis 9 oder von 9 bis 9,5 |
| von 6 bis 10 | von 6,5 bis 7 oder von 7 bis 7,5 oder von 7,5 bis 8 oder von 8 bis 8,5 oder von 8,5 bis 9 oder von 9 bis 9,5. |

22. Vorrichtung zum Ausführen eines Verfahrens nach einem der vorangehenden Ansprüche 1 bis 21, dadurch gekennzeichnet, daß es umfaßt
eine Düsenvorrichtung mit koaxialen Bohrungen, deren stromauf angeordneter weiterer Abschnitt als eine Mischkammer wirkt und deren stromab angeordneter engerer Querschnitt als eine Fluidöffnung wirkt, die eine Düse ist oder zu einer zweiten Kammer mit einer Düse führt, und
ein Mittel zum Zuführen von Wasser, das unter Druck stehen kann oder auch nicht, und Druckluft unter einem vorbestimmten Druck zu der Mischkammer.

23. Vorrichtung nach Anspruch 22, dadurch gekennzeichnet, daß die Düse in einer Wand der Mischkammer angeordnet ist.

24. Vorrichtung nach Anspruch 22 oder 23, dadurch gekennzeichnet, daß die Mischkammer vorzugsweise in Richtung der Düse konvergiert.

25. Vorrichtung nach Anspruch 22, 23 oder 24, dadurch gekennzeichnet, daß Mittel zum Regulieren des Luftdrucks vorhanden sind, vorzugsweise stufenlos, sowie Mittel zum Regulieren des Wasserdrucks, vorzugsweise stufenlos, insbesondere unabhängig vom Luftdruck.

26. Vorrichtung nach einem der vorangehenden Ansprüche 22 bis 25, dadurch gekennzeichnet, daß die Düse beweglich ist, wobei die Düse vorzugsweise auf einem drehbaren Arm gehalten ist.

27. Vorrichtung nach einem der vorangehenden Ansprüche 22 bis 25, dadurch gekennzeichnet, daß die zweite Kammer ein Element aufweist, das in der Lage ist, sich unter dem Einfluß des Wassers zu drehen, um das Wasser rotierend in einem Sprühstrahl von Tröpfchen stromab der Düse auszuspritzen.

28. Vorrichtung nach einem der vorangehenden Ansprüche 22 bis 27, dadurch gekennzeichnet, daß die Vorrichtung in einem Gehäuse untergebracht ist.

29. Vorrichtung zum Reinigen von Blumenzwiebeln, Blumenknollen oder mehrjährigen Pflanzen bzw. Teilen davon, nach einem der vorangehenden Ansprüche 22 bis 28, zum Ausführen des Verfahrens nach Anspruch 11.

30. Vorrichtung zum Reinigen von weichem Obst, insbesondere von Stachelbeeren, Trauben, Pflaumen, Roten Johannisbeeren, Blaubeeren oder Pfirsichen, nach einem der vorangehenden Ansprüche 22 bis 28, zum Ausführen des Verfahrens nach Anspruch 12.

31. Vorrichtung zum Reinigen von mittelharten Feldfrüchten, insbesondere Lauch, Spargel, Bohnen, Paprika, Essiggurken, Salatgurken, Kohlsorten (Blumenkohl, Weißkohl, Grünkohl, Rotkohl usw.) oder Tomaten, nach einem der vorangehenden Ansprüche 22 bis 28, zum Ausführen des Verfahrens nach Anspruch 13.

32. Verfahren zum Reinigen von harten Feldfrüchten, insbesondere Karotten, Wurzelstöcke und/oder Obstbäume, Halmfrüchte und/oder Wurzelfrüchte für Vermehrungszwecke, Erzeugnisse, die aus dem Anbau von Zwiebeln und/oder Silberhautzwiebeln oder Karotten stammen, nach einem der vorangehenden Ansprüche 22 bis 28, zum Ausführen des Verfahrens nach Anspruch 14.

33. Vorrichtung zum Reinigen von Zuckerrüben, roter Beete oder Kartoffeln, oder davon stammende Erzeugnisse, insbesondere Chips, Brei und Viehfutterprodukte nach einem der vorangehenden Ansprüche 22 bis 28, zum Ausführen des Verfahrens nach Anspruch 15.

34. Vorrichtung zum Reinigen von Straßen, insbesondere von porösem Asphalt, nach einem der vorangehenden Ansprüche 22 bis 28, zum Ausführen des Verfahrens nach Anspruch 16.

35. Vorrichtung zum Reinigen von Fahrzeugen, insbesondere von Personenfahrzeugen in einer Fahrzeugwaschanlage, von Zügen, Bussen oder Lastkraftwagen in speziellen Wascheinrichtungen, nach einem der vorangehenden Ansprüche 22 bis 28, zum Ausführen des Verfahrens nach Anspruch 17.

36. Vorrichtung zum Reinigen von Geschirr, Besteck usw. in einem Geschirrspüler, und von Maschinen oder Werkzeugen in einer Industriewaschmaschine, nach einem der vorangehenden Ansprüche 22 bis 28, zum Ausführen des Verfahrens nach Anspruch 18.

37. Vorrichtung zum Reinigen von Personen unter Verwendung eines Duschkopfs, nach einem der vorangehenden Ansprüche 22 bis 28, zum Ausführen des Verfahrens nach Anspruch 19.

38. Vorrichtung zum Reinigen von harten Oberflächen, insbesondere Fassaden von Häusern, Industrie- und Geschäftsgebäuden, Glas, Kunststoff und Metall, nach einem der vorangehenden Ansprüche 22 bis 28, zum Ausführen des Verfahrens nach Anspruch 20.

39. Vorrichtung zum Reinigen von weichen Oberflächen, insbesondere von Wolle oder Fasermaterialien wie Baumwolle, Flachs, Stoff, Seide oder Papier, nach einem der vorangehenden Ansprüche 22 bis 28, zum Ausführen des Verfahrens nach Anspruch 21.

## Revendications

1. Procédé de nettoyage d'une surface sale, dans lequel de l'eau est projetée contre la surface sale de façon à éliminer par lavage la saleté avec l'eau, dans lequel l'eau et l'air comprimé sont mélangés, après quoi l'eau est projetée contre la surface sale sous forme d'un jet pulvérisé de gouttelettes, caractérisé en ce qu'on utilise un dispositif formant buse comprenant des alésages coaxiaux, la partie la plus large amont de la buse servant de chambre de mélange dans laquelle l'eau et l'air comprimé sont mélangés et dans laquelle le mélange obtenu présente une surpression par rapport à l'environnement, et la partie plus étroite de la buse en aval agissant comme un orifice de fluide.

2. Procédé selon la revendication 1, dans lequel l'orifice de fluide est une buse, dans lequel le jet pulvérisé de gouttelettes est projeté contre la surface sale en aval de la buse.

3. Procédé selon la revendication 1, dans lequel l'orifice de fluide conduit à une seconde chambre qui présente une buse, dans lequel le jet pulvérisé de gouttelettes est projeté contre la surface sale en aval de la buse.

4. Procédé selon la revendication 1, 2 ou 3, dans lequel la pression de l'air est au moins égale à 1 bar, de préférence au moins égale à 1,5 bar.

5. Procédé selon l'une quelconque des revendications précédentes 1 à 4, dans lequel la pression de l'air peut être réglée, en particulier sans discontinuité.

6. Procédé selon l'une quelconque des revendications précédentes 1 à 5, dans lequel l'eau sous pression est fournie à la chambre de mélange sous une pression prédéterminée, en aval de la buse.

7. Procédé selon la revendication 6, dans lequel la pression de l'eau peut être réglée, de préférence sans discontinuité.

8. Procédé selon la revendication 7, dans lequel la pression de l'eau peut être réglée indépendamment de la pression de l'air.

9. Procédé selon l'une quelconque des revendications précédentes 1 à 8, dans lequel la pression de l'air et la pression de l'eau sont déterminées sous un rapport se situant entre 2/1 et 1/2.

10. Procédé selon l'une quelconque des revendications précédentes 1 à 9, dans lequel l'eau est projetée contre la surface sous forme d'un jet pulvérisé de gouttelettes, depuis une distance qui est plus petite que la distance à partir de laquelle l'eau produit un écoulement turbulent en aval de la buse.

11. Procédé pour nettoyer des bulbes de fleurs, des tubercules de fleurs ou des plantes vivaces (ou leurs parties ) selon l'une quelconque des revendications précédentes 1 à 10, dans lequel la pression de l'eau et la pression de l'air sont déterminées comme suit :
| | |
|---|---|
| pression de l'eau (bar) | pression de l'air (bar, en tant que surpression par rapport à la pression de l'eau) |
| de 0,5 à 1,5 | de 8 à 8,5 |
| de 1,5 à 3 | de 7,5 à 8 |
| de 2,8 à 4,2 | de 5,5 à 6 |
| de 4 à 6,2 | de 5 à 5,5 |
| de 6 à 10 | de 3,5 à 4 ou de 4 à 4,5 ou |
| | de 4,5 à 5 ou de 5 à 5,5 ou |
| | de 5,5 à 6 ou de 6 à 6,5. |

12. Procédé pour nettoyer des fruits tendres, en particulier des fraises, des grappes de raisin, des prunes, des groseilles, des myrtilles ou des pêches, selon l'une quelconque des revendications précédentes 1 à 10, dans lequel la pression de l'eau et la pression de l'air sont déterminées comme suit :
| | |
|---|---|
| pression de l'eau (bar) | pression de l'air (bar, en tant que surpression par rapport à la pression de l'eau) |
| de 0 à 0,5 | de 1,5 à 2 ou de 2 à 2,5 |
| de 0,5 à 1,5 | de 1,5 à 2 ou de 2 à 2,5. |

13. Procédé pour nettoyer des récoltes moyennement dures, en particulier des poireaux, des asperges, des fèves, de la ciboule, des piments, des cornichons, des concombres, diverses variétés de chou (chou-fleur, chou blanc, chou vert, chou rouge, etc.) ou des tomates, selon l'une quelconque des revendications précédentes 1 à 10, dans lequel la pression de l'eau et la pression de l'air sont déterminées comme suit :
| | |
|---|---|
| pression de l'eau (bar) | pression de l'air (bar, en tant que surpression par rapport à la pression de l'eau) |
| de 2,8 à 4,2 | de 6,5 à 7 ou de 7 à 7,5 ou |
| | de 8 à 8,5 ou de 8,5 à 9 ou |
| | de 9 à 9,5 |
| de 4 à 6,2 | de 6,5 à 7 ou de 7 à 7,5 ou |
| | de 7,5 à 8 ou de 8 à 8,5 ou |
| | de 8,5 à 9 ou de 9 à 9,5 |
| de 6 à 10 | de 6,5 à 7 ou de 7 à 7,5 ou |
| | de 7,5 à 8 ou de 8 à 8,5 ou |
| | de 8,5 à 9 ou de 9 à 9,5. |

14. Procédé pour nettoyer des récoltes dures, en particulier des carottes, des scorsonères et des rhizomes et/ou des arbres fruitiers, des plants et/ou racines alimentaires destinées à la multiplication, des produits issus de la culture d'oignons et/ou des oignons ou des carottes à peau argentée selon l'une quelconque des revendications précédentes 1 à 10, dans lequel la pression de l'eau et la pression de l'air sont déterminées comme suit :
| | |
|---|---|
| pression de l'eau (bar) | pression de l'air (bar, en tant que surpression par rapport à la pression de l'eau) |
| de 2,8 à 4,2 | de 9,5 à 10 ou de 10 à 15 ou |
| | de 15 à 20 |
| de 4 à 6,2 | de 9,5 à 10 ou de 10 à 15 ou |
| | de 15 à 20 |
| de 6 à 10 | de 9,5 à 10 ou de 10 à 15 ou |
| | de 15 à 20. |

15. Procédé pour nettoyer des betteraves sucrières, des raves ou des pommes de terre, ou les produits qui en sont issus, en particulier des brisures, de la pulpe et des produits d'alimentation pour bétail selon l'une quelconque des revendications précédentes 1 à 10, dans lequel la pression de l'eau et la pression de l'air sont déterminées comme suit :
| | |
|---|---|
| pression de l'eau (bar) | pression de l'air (bar, en tant que surpression par rapport à la pression de l'eau) |
| de 6 à 10 | de 4 à 4,5 ou de 4,5 à 5 ou |
| | de 5 à 5,5 ou de 5,5 à 6 ou |
| | de 6 à 6,5 ou de 6,5 à 7 ou |
| | de 7 à 7,5 ou de 7,5 à 8 ou |
| | de 8 à 8,5 ou de 8,5 à 9 ou |
| | 9 à 9,5 ou de 9,5 à 10 ou |
| | de 10 à 15 ou de 15 à 20. |

16. Procédé pour nettoyer des routes, en particulier des bitumes poreux, selon l'une quelconque des revendications précédentes 1 à 10, dans lequel la pression de l'eau et la pression de l'air sont déterminées comme suit :
| | |
|---|---|
| pression de l'eau (bar) | pression de l'air (bar, en tant que surpression par rapport à la pression de l'eau) |
| de 6 à 10 | de 7 à 7,5 ou de 7,5 à 8 ou |
| | de 8 à 8,5 ou de 8,5 à 9 ou |
| | de 9 à 9,5 ou de 9,5 à 10 ou |
| | de 10 à 15 ou de 15 à 20. |

17. Procédé pour nettoyer des véhicules, en particulier des voitures pour passagers dans une station de lavage de voitures, des trains, des bus ou des camions dans des installations de lavage particulières, selon l'une quelconque des revendications précédentes 1 à 10, dans lequel la pression de l'eau et la pression de l'air sont déterminées comme suit :
| | |
|---|---|
| pression de l'eau (bar) | pression de l'air (bar, en tant que surpression par rapport à la pression de l'eau) |
| de 0,5 à 1,5 | de 2,5 à 3 ou de 3 à 3,5 ou |
| | de 3,5 à 4 ou de 4 à 4,5 ou |
| | de 4,5 à 5 ou de 5 à 5,5 ou |
| | de 5,5 à 6 . |

18. Procédé pour nettoyer de la vaisselle et des couverts de table dans un lave-vaisselle, et des machines ou outils dans une machine de lavage industrielle, selon l'une quelconque des revendications précédentes 1 à 10, dans lequel la pression de l'eau et la pression de l'air sont déterminées comme suit :
| | |
|---|---|
| pression de l'eau (bar) | pression de l'air (bar, en tant que surpression par rapport à la pression de l'eau) |
| de 0,5 à 1,5 | de 4,5 à 5 ou de 5 à 5,5 ou |
| | de 5,5 à 6 ou de 6 à 6,5 ou |
| | de 6,5 à 7 ou de 7 à 7,5 ou |
| | de 7,5 à 8 . |

19. Procédé pour nettoyer des personnes, utilisant une pomme de douche, selon l'une quelconque des revendications précédentes 1 à 10, dans lequel la pression de l'eau et la pression de l'air sont déterminées comme suit :
| | |
|---|---|
| pression de l'eau (bar) | pression de l'air (bar, en tant que surpression par rapport à la pression de l'eau) |
| de 0,5 à 1,5 | de 1,5 à 2 ou de 2 à 2,5 ou |
| | de 2,5 à 3 ou de 3 à 3,5 ou |
| | de 3,5 à 4 ou de 4 à 4,5 ou |
| | de 4,5 à 5 |
| de 1,5 à 3 | de 1,5 à 2 ou de 2 à 2,5 ou |
| | de 2,5 à 3 ou de 3 à 3,5 ou |
| | de 3,5 à 4 ou de 4 à 4,5 ou |
| | de 4,5 à 5 . |

20. Procédé pour nettoyer des surfaces dures, en particulier des façades de maisons, des bâtiments industriels et commerciaux, du verre, des plastiques et du métal, selon l'une quelconque des revendications précédentes 1 à 10, dans lequel la pression de l'eau et la pression de l'air sont déterminées comme suit :
| | |
|---|---|
| pression de l'eau (bar) | pression de l'air (bar, en tant que surpression par rapport à la pression de l'eau) |
| de 6 à 10 | de 9,5 à 10 ou de 10 à 15 ou |
| | de 15 à 20 . |

21. Procédé pour nettoyer des surfaces tendres, en particulier de la laine ou des matériaux fibreux, tels que du coton, du lin, des textiles, de la soie ou du papier, selon l'une quelconque des revendications précédentes 1 à 10, dans lequel la pression de l'eau et la pression de l'air sont déterminées comme suit :
| | |
|---|---|
| pression de l'eau (bar) | pression de l'air (bar, en tant que surpression par rapport à la pression de l'eau) |
| de 2,8 à 4,2 | de 6,5 à 7 ou de 7 à 7,5 ou |
| | de 7,5 à 8 ou de 8 à 8,5 ou |
| | de 8,5 à 9 ou de 9 à 9,5 |
| de 4 à 6,2 | de 6,5 à 7 ou de 7 à 7,5 ou |
| | de 7,5 à 8 ou de 8 à 8,5 ou |
| | de 8,5 à 9 ou de 9 à 9,5 |
| de 6 à 10 | de 6,5 à 7 ou de 7 à 7,5 ou |
| | de 7,5 à 8 ou de 8 à 8,5 ou |
| | de 8,5 à 9 ou de 9 à 9,5. |

22. Dispositif pour la mise en oeuvre d'un procédé selon l'une quelconque des revendications précédentes 1 à 21, caractérisé en ce qu'il comprend
un dispositif formant buse comprenant des alésages coaxiaux, la partie la plus large amont de la buse servant de chambre de mélange et la partie la plus étroite de la buse en aval agissant comme un orifice de fluide étant constituée par une buse ou conduisant à une seconde chambre comportant une buse, et
des moyens pour fournir de l'eau, qui peut être ou non pressurisée, et de l'air comprimé sous une pression prédéterminée à la chambre de mélange.

23. Dispositif selon la revendication 22, dans lequel la buse est présente dans une paroi de la chambre de mélange.

24. Dispositif selon la revendication 22 ou 23, dans lequel la chambre de mélange converge de préférence dans la direction de la buse.

25. Dispositif selon la revendication 22, 23 ou 24, dans lequel des moyens sont prévus pour régler la pression de l'air, de préférence sans discontinuité, ainsi que des moyens pour régler la pression de l'eau, de préférence sans discontinuité, en particulier indépendamment de la pression de l'air.

26. Dispositif selon l'une quelconque des revendications précédentes 22 à 25, dans lequel la buse est mobile, et dans lequel la buse est de préférence montée sur un bras tournant.

27. Dispositif selon l'une quelconque des revendications précédentes 22 à 25, dans lequel la seconde chambre comprend un organe qui est susceptible de tourner sous l'influence de l'eau pour projeter l'eau en rotation selon un jet pulvérisé de gouttelettes en aval de la buse.

28. Dispositif selon l'une quelconque des revendications précédentes 22 à 27, dans lequel le dispositif est logé dans un boîtier.

29. Dispositif pour nettoyer des bulbes de fleur, des tubercules de fleur ou des plantes vivaces (ou leurs parties) selon l'une quelconque des revendications précédentes 22 à 28 pour la mise en oeuvre du procédé selon la revendication 11.

30. Dispositif pour nettoyer des fruits tendres, en particulier des fraises, des grappes de raisin, des prunes, des groseilles, des myrtilles ou des pêches, selon l'une quelconque des revendications précédentes 22 à 28 pour la mise en oeuvre du procédé selon la revendication 12.

31. Dispositif pour nettoyer des récoltes moyennement dures, en particulier des poireaux, des asperges, des fèves, de la ciboule, des piments, des cornichons, des concombres, diverses variétés de chou (chou-fleur, chou blanc, chou vert, chou rouge, etc.) ou des tomates, selon l'une quelconque des revendications précédentes 22 à 28 pour la mise en oeuvre du procédé selon la revendication 13.

32. Dispositif pour nettoyer des récoltes dures, en particulier des carottes, des scorsonères et des rhizomes et/ou des arbres fruitiers, des plants et/ou racines alimentaires destinées à la multiplication, des produits issus de la culture d'oignons et/ou des oignons ou des carottes à peau argentée selon l'une quelconque des revendications précédentes 22 à 28 pour la mise en oeuvre du procédé selon la revendication 14.

33. Dispositif pour nettoyer des betteraves sucrières, des raves ou des pommes de terre, où les produits qui en sont issus, en particulier des brisures, de la pulpe et des produits d'alimentation pour bétail selon l'une quelconque des revendications précédentes 22 à 28 pour la mise en oeuvre du procédé selon la revendication 15.

34. Dispositif pour le nettoyage de routes, en particulier de bitumes poreux, selon l'une quelconque des revendications précédentes 22 à 28 pour la mise en oeuvre du procédé selon la revendication 16.

35. Dispositif pour le nettoyage de véhicules, en particulier de voitures de passagers dans une station de lavage de voitures, de trains, bus ou camions dans des installations de lavage particulières, selon l'une quelconque des revendications précédentes 22 à 28 pour la mise en oeuvre du procédé selon la revendication 17.

36. Dispositif pour nettoyer de la vaisselle et des couverts de table dans un lave-vaisselle, et des machines ou outils dans une machine de lavage industrielle, selon l'une quelconque des revendications précédentes 22 à 28 pour la mise en oeuvre du procédé selon la revendication 18.

37. Dispositif pour le nettoyage des personnes, utilisant une pomme de douche, selon l'une quelconque des revendications précédentes 22 à 28 pour la mise en oeuvre du procédé selon la revendication 19.

38. Dispositif pour nettoyer des surfaces dures, en particulier des façades de maisons, des bâtiments industriels et commerciaux, du verre, des plastiques et du métal, selon l'une quelconque des revendications précédentes 22 à 28 pour la mise en oeuvre du procédé selon la revendication 20.

39. Dispositif pour nettoyer des surfaces tendres, en particulier de la laine ou des matériaux fibreux, tels que du coton, du lin, des textiles, de la soie ou du papier, selon l'une quelconque des revendications précédentes 22 à 28 pour la mise en oeuvre du procédé selon la revendication 21.
